# EUROPÄISCHE PATENTSCHRIFT

(11) **EP 0 850 506 B1**
(45) Veröffentlichungstag und Bekanntmachung des Hinweises auf die Patenterteilung: **02.07.2003**
(21) Anmeldenummer: 97920542.4
(22) Anmeldetag: 25.03.1997
(51) Int. Cl.: H02J 7/14

(54) **VORRICHTUNG ZUR SPANNUNGSVERSORGUNG IN EINEM KRAFTFAHRZEUG**
DEVICE FOR SUPPLYING POWER IN A MOTOR VEHICLE
DISPOSITIF D'ALIMENTATION EN COURANT DANS UN VEHICULE AUTOMOBILE

(30) Priorität: 15.07.1996 DE 19628222
(43) Veröffentlichungstag der Anmeldung: 01.07.1998
(73) Patentinhaber: ROBERT BOSCH GMBH, 70442 Stuttgart (DE)
(72) Erfinder: FREY, Wunibald, D-71701 Schwieberdingen (DE); GEGUSCH-BRUNNER, Hans, D-76275 Ettlingen (DE); SCHENK, Joachim, D-71282 Hemmingen (DE); BREUNIG, Volker, D-74078 Heilbronn (DE); SCHÖTTLE, Richard, D-75417 Mühlacker (DE); AUPPERLE, Bernd, D-71711 Steinheim (DE)
(86) Internationale Anmeldenummer: DE9700603
(87) Internationale Veröffentlichungsnummer: WO98002950

(56) Entgegenhaltungen:
- DE-A- 4 028 242
- US-A- 4 723 105
- US-A- 4 757 249
- US-A- 5 488 283

## Beschreibung

Die Erfindung geht aus von einer Vorrichtung zur Spannungsversorgung in einem Kraftfahrzeug nach der Gattung des Anspruchs 1.

### Stand der Technik

Die Spannungsversorgung in Kraftfahrzeugen wurde bisher üblicherweise mit Hilfe einer einzigen, von einem Generator aufgeladenen Batterie durchgeführt. In modernen Kraftfahrzeugen mit einer Vielzahl von elektrischen Verbrauchern reicht eine Batterie zur Spannungsversorgung, z. B. zur Sicherstellung des Starts teilweise nicht mehr aus, so daß zwei getrennte Batterien verwendet werden, die üblicherweise zueinander parallel geschaltet sind. Damit nicht die beiden Batterien zyklisiert werden und damit Spannungseinbrüche, die während der Betätigung des Starters auftreten können, von spannungskritischen Bauteilen ferngehalten werden können, wird bei einer aus der DE-PS 41 38 943 bekannten Vorrichtung zur Spannungsversorgung in einem Kraftfahrzeug mit zwei Batterien ein Lade-/Trennmodul zwischen die beiden Batterien geschaltet, das während des Startvorgangs die dem Starter zugeordnete Batterie vom übrigen Bordnetz abtrennt. Da die Nennspannung der dem Starter zugeordneten Batterie etwas geringer ist als die Nennspannung der Bordnetzbatterie wird sichergestellt, daß die Starterbatterie stets optimal geladen ist.

Aus der Druckschrift US-A-5 488 283 ist eine Vorrichtung zur Spannungsversorgung in einem Fahrzeug bekannt, bei der elektronische Schalter, die beispielsweise Feldeffekttransistoren umfassen, zwischen zwei Versorgurigskreisen mit je einer Batterie liegen. Diese elektronische Schalter, die Bestandteil einer elektronischen Steuereinrichtung sind, können von der elektronischen Steuereinrichtung nach Bedarf geöffnet oder geschlossen werden. Die bekannte Vorrichtung zur Spannungsversorgung wird insbesonders dazu eingesetzt, dass bei einem Defekt im Hauptversorgungskreis mit der Hauptbatterie ein Notbetrieb über die Hilfsbatterie möglich ist.

Aus der US-A-4 723 105 ist ein Spannungsversorgungssystem in einem Zweibatteriebordnetz in einem Kraftfahrzeug bekannt, bei dem ein Spannungswandler eingesetzt wird, der die erforderliche Spannungshöhe zuverlässig gewährleistet. Dazu wird der als DC/DC-Wandler arbeitende Spannungswandler in zwei Betriebsarten betrieben, wobei er in der ersten Betriebsart dafür sorgt, dass die beiden Batterien etwa gleich geladen sind und der DC/DC-Wandler in der zweiten Betriebsart dafür sorgt, dass die Spannung auch während der Betätigung des Anlassers konstant bleibt.

Aus der Druckschrift DE 40 28 242 A ist eine Vorrichtung zur Spannungsversorgung in einem Kraftfahrzeug bekannt, die einen Versorgungskreis aufweist, der wenigstens einen von einem Spannungsregler geregelten Generator umfaßt sowie eine Batterie und mit dieser Batterie verbindbare erste Verbraucher. Weiterhin ist ein Startkreis vorgesehen, der neben einer zweiten Batterie noch einen Starter sowie zweite Verbraucher umfaßt.

Der Starter kann mit der zweiten Batterie verbunden werden, außerdem ist die zweite Batterie über weitere Schalter mit dem Generator sowie der ersten Batterie verbindbar. Die Schalter werden von einem Steuergerät angesteuert, das dazu mit dem Versorgungskreis und dem Startkreis über jeweils wenigstens einen Anschluß in Verbindung steht. Die Schalter selbst sind nicht Bestandteil des Steuergerätes.

### Vorteile der Erfindung

Die erfindungsgemäße Vorrichtung zur Spannungsversorgung in einem Kraftfahrzeug mit den kennzeichnenden Merkmalen des Hauptanspruchs hat den Vorteil, daß auch bei schlechtem Ladezustand der Batterien sichergestellt ist, daß das Fahrzeug noch für eine gewisse Zeit, die beispielsweise ausreicht, um die nächste Werkstatt anzusteuern, betreibbar ist. Erzielt wird dieser Vorteil, indem ein Bordnetzsteuergerät eingesetzt wird, das die Anschluß- bzw. Trennfunktionen zwischen den beiden Batterien durchführt und einen zusätzlichen Anschluß aufweist, über den die Spannungsversorgung für die für den Betrieb des Kraftfahrzeugs unbedingt erforderlichen elektrischen bzw. elektronischen Komponenten sichergestellt werden kann. Dieser zusätzliche Anschluß wird mit Hilfe einer vorteilhaften Ausgestaltung der Lade-/Trennschaltung mit höchster Priorität mit Spannung versorgt, so daß ein Notbetrieb auch bei weitgehend entleerte Versorgungs-Batterie noch möglich ist.

Weitere Vorteile der Erfindung werden mit Hilfe der in den Unteransprüchen angegebenen Maßnahmen erzielt. Dabei ist besonders vorteilhaft, daß bei der zusätzlichen Verwendung eines Gleichspannungswandlers, der extern, separat oder im Bordnetzsteuergerät integriert sein kann, der die betriebsrelevanten Bauelemente versorgt, eine ausreichend hohe Spannung bereitgestellt werden kann, auch wenn beide Batterien weitgehend entladen sind. Durch Verwendung von elektronischen Analogschaltern sowie weiteren Gleichspannungswandlern läßt sich ein bidirektionales Umschaltmodul erzeugen, das störunempfindlich ist und besonders zuverlässig arbeitet. Vorteilhafterweise erfolgt die Ansteuerung der einzelnen Bauelemente mit Hilfe einer Steuereinheit z. B. eines Mikroprozessors.

### Zeichnung

Die Erfindung wird in den Figuren dargestellt und in der nachfolgenden Beschreibung näher erläutert. Im einzelnen zeigt Figur 1 ein Blockschaltbild eines erfindungsgemäßen Zwei-Batterien-Bordnetzes, Figur 2 ein erstes und Figur 3 ein zweites Bordnetzmodul, das Bestandteil des Bordnetz-Steuergerätes ist. In Figur 4 ist ein Blockschaltbild eines allgemeinen Bordnetzmoduls dargestellt und die Figuren 5, 6, 7 und 8 zeigen Ausgestaltungen eines Bordnetzmoduls, wobei einerseits ein Bordnetzmodul mit Verbindungsschalter in Form eines Analogschalters aufgebaut ist oder ein Bordnetzmodul mit Umschaltfunktion, ein Bordnetzmodul mit einer Kombination aus Analogschalter und Spannungswandler.

### Beschreibung

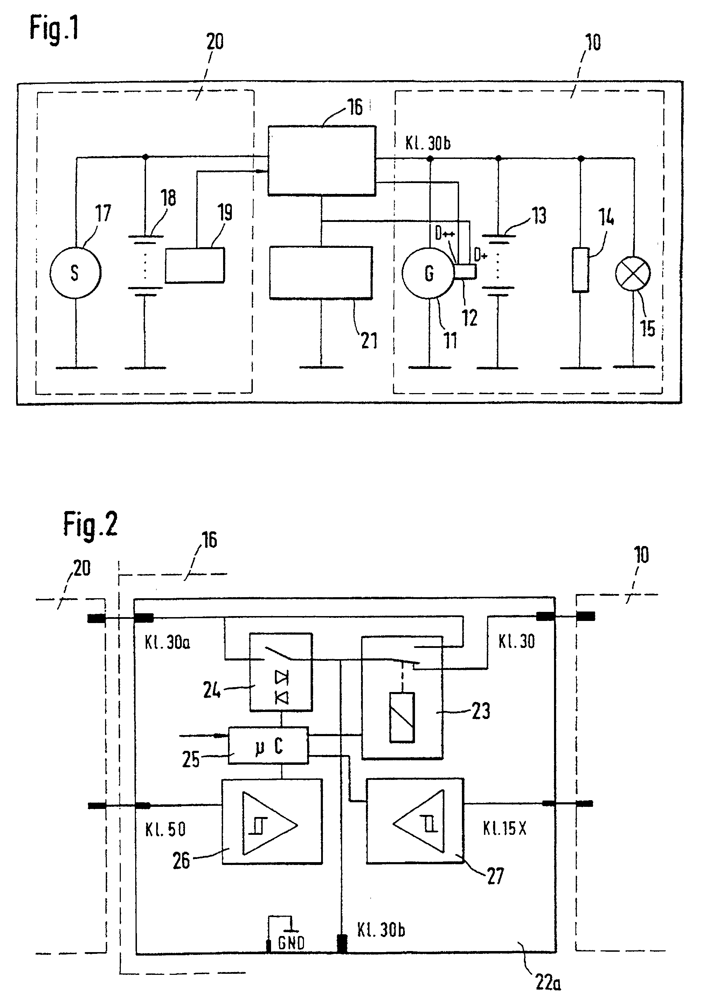

In Figur 1 ist ein Blockschaltbild eines erfindungsgemäßen Zwei-Batterien-Bordnetzes dargestellt, das im einzelnen folgende Komponenten umfaßt: einen Versorgungskreis 10, der aus dem Generator 11 samt Spannungsregler 12, der Versorgungsbatterie 13, Verbrauchern 14 und 15 besteht. Die Bauteile des Versorgungskreises 10 sind über einen Anschluß Kl.30 mit dem Bordnetzsteuergerät 16 verbunden. Das Bordnetzsteuergerät 16 ist über einen weiteren Anschluß Kl.30a mit dem Starter 17 und der Startbatterie 18 verbunden. Der Starter 17 sowie die Startbatterie 18 und ein Temperatursensor 19, der die Temperatur der Startbatterie ermittelt und ans Bordnetzsteuergerät 16 liefert, bilden den Startkreis 20.

Das Bordnetzsteuergerät 16 weist einen weiteren Anschluß Kl.30b auf, die zur Versorgung von für den Start und Betrieb des Fahrzeuges unbedingt erforderlichen Bauteilen dient. In Figur 1 sind diese Bauteile als Block 21 dargestellt. Die relevanten Komponenten, die nicht nur im üblichen Betriebsfall, sondern auch im Notbetrieb unbedingt mit Spannung versorgt werden müssen, lassen sich als Start- und Ersatzbetriebskomponenten zusammenfassen, wobei hierzu auch der Regler des Generators gehört, mit dem Anschluß D+. Der Generatorregler kann auch über einen zusätzlichen DC/DC-Wandler fremd versorgt werden z. B. für die Generatorerregung.

Die jeweils nicht mit dem Bordnetzsteuergerät in Verbindung stehenden Seiten der vorstehend erwähnten Bauelemente liegen in üblicher Weise jeweils auf Masse. Die Ausgestaltung des Bordnetzsteuergerätes bzw. die für das Verständnis der Erfindung erforderlichen Schaltungsteile des Bordnetzsteuergerätes werden in den folgenden Figuren näher erläutert.

In Figur 2 ist ein erstes Bordnetzmodul als Blockschaltbild dargestellt. Dieses Modul ist Bestandteil des Bordnetzsteuergerätes 16 oder entspricht diesem Steuergerät. Das Bordnetzmodul nach Figur 2 weist die Anschlüsse Kl.30 und Kl.30a auf, über die das BN-Modul vom Versorgungskreis 10 oder Startkreis 20 versorgt werden kann sowie die Kl.30b über die die relevanten Komponenten 21 vom Modul mit Spannung versorgt werden. Weiterhin ist ein Umschalter 23, z. B. ein Relais sowie ein elektronischer bzw. elektrischer Schalter 24 vorhanden. Über den.Umschalter 23 sowie den elektronischen Schalter 24 können Verbindungen zwischen den Klemmen Kl.30, Kl.30a und Kl.30b hergestellt oder unterbrochen werden. Welche der Verbindungen hergestellt und welche unterbrochen werden, wird mit Hilfe einer Steuereinheit z. B. eines Mikrocomputers 25 festgelegt. Die Steuereinheit 25 wertet dabei Informationen aus, die ihm mit Hilfe weiterer Baugruppen zugeführt werden. Er steht dazu mit allen Baugruppen des Bordnetzmoduls 22 in Verbindung, wobei diese Verbindungen Ansteuerleitungen und/oder Informationsleitungen umfassen.

Für die Ansteuerung des elektronischen Schalters 24 sowie des Umschalters 23 werden in der Steuereinheit spezielle Informationen ausgewertet. Eine dieser Informationen ist die Information, ob der Starter 17 betätigt ist oder nicht. Sie wird über Klemme Kl.50 dem Bordnetzmodul 22 zugeführt, wobei die Auswertung in einem im Ausführungsbeispiel als Block 26 dargestellten Schwellwertschalter erfolgt. Block 26 kann selbstverständlich Bestandteil der Steuereinheit 25 sein oder als getrennte Schaltung aufgebaut sein, wesentlich ist, daß am Ausgang des Block 26 ein Signal auftritt, das erkennen läßt, ob der Starter betätigt wird bzw. ist oder nicht. Erfolgt eine Betätigung des Starters, wird in Abhängigkeit vom Ausgangssignal des Blocks 26 der elektronische Schalter 24 angesteuert, wobei der elektronische Schalter 24 öffnet, sobald der Starter betätigt wird. Damit soll sichergestellt werden, daß vom Startkreis 20 kein Spannungseinbruch auf das übrige Bordnetz weitergegeben wird.

Block 27 stellt eine Schwellwertstufe dar, der über einen Anschluß Kl.15X externe Informationen z. B. vom Zündschloß zugeführt werden, die die Versorgung des BN-Steuergerätes einschaltet und evt1. eine Betätigung des elektronischen Schalters 24 oder des Umschalters 23 erforderlich machen. Der Block 27 kann ebenfalls als getrennte Schaltung aufgebaut sein oder in der Steuereinheit 25 integriert sein.

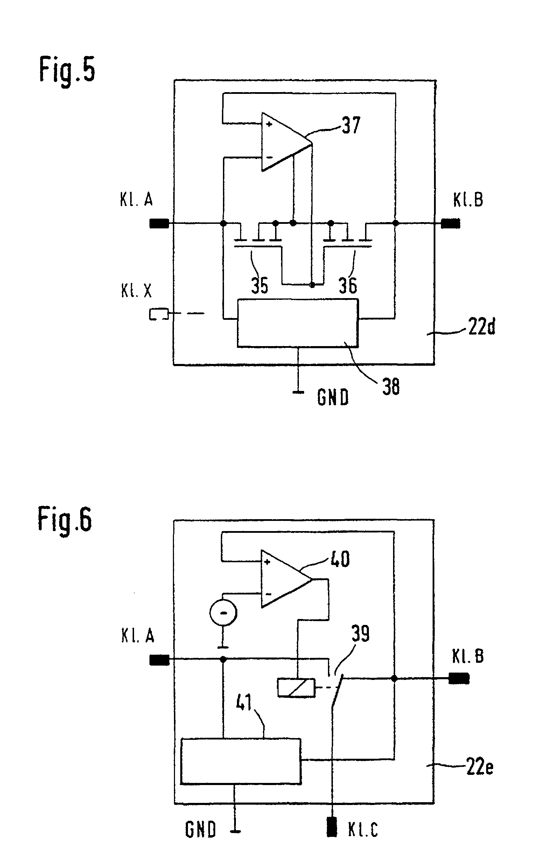

Mit dem Bordnetzmodul 22 läßt sich ein Zwei-Batterien-Bordnetz aufbauen, bei dem der Startkreis und der Versorgungskreis auf der selben oder auch begrenzt unterschiedlichen Spannung, üblicherweise 12 V, liegen. Diese Spannung wird dann auch den Start- und Ersatzbetriebskomponenten 21 zur Verfügung gestellt. Die einzelnen Umschaltvorgänge, die zur optimalen Spannungsversorgung erforderlich sind, werden im folgenden noch anhand der in den Schaltungen nach Figur 5 bis 8 dargestellten Beispiele erläutert. Prinzipiell erfolgt die Ansteuerung des elektronischen Schalters, sowie des Umschalters 23 so, daß die Klemme Kl.30b anschließbaren betriebsrelevanten Verbraucher auch bei schlechtem Ladezustand der Batterien zuverlässig mit Spannung versorgt werden und bei betätigtem Starter ein Spannungseinbruch zumindest bei diesen Bauteilen verhindert wird.

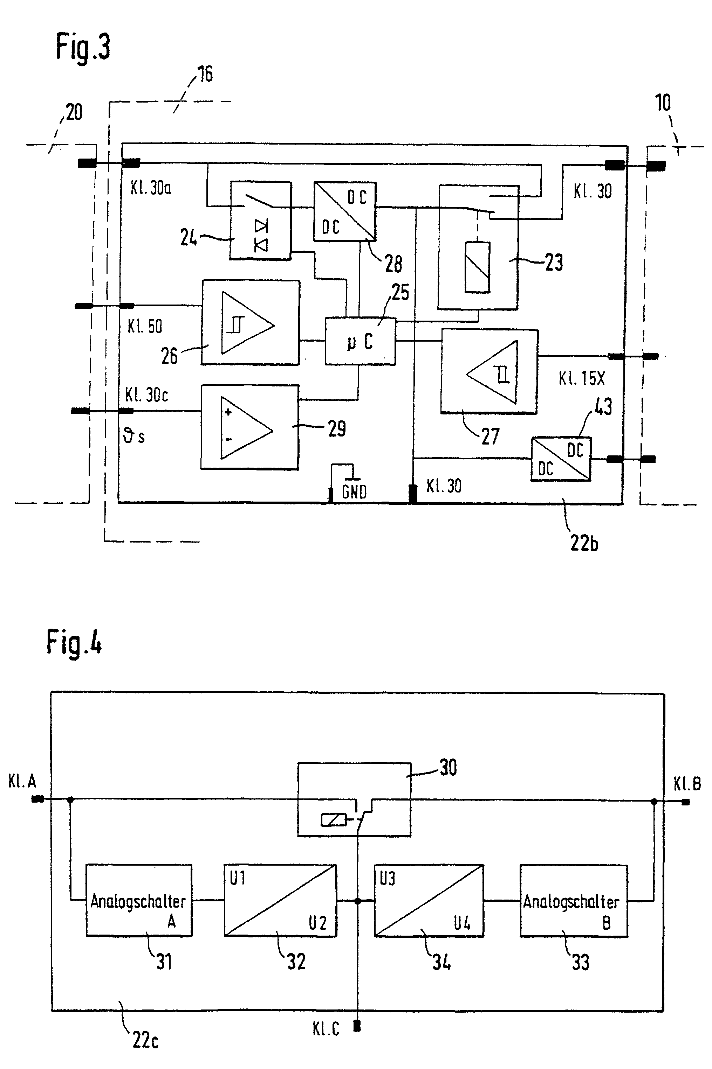

In Figur 3 ist ein erweitertes Bordnetzmodul als Blockschaltbild dargestellt. Dieses Modul weist die selben Anschlüsse auf wie das Modul nach Figur 2. Auch ein Teil der übrigen Bauelemente entspricht denen des Moduls nach Figur 2. Zusätzlich befindet sich zwischen dem elektronischen Schalter 24 und dem Umschalter 23 ein DC/DC-Wandler 28. Weiterhin wird über einen zusätzlichen Anschluß Kl.30c, das mit Hilfe des Temperatursensors 18 gemessene Signal, das der Temperatur der Startbatterie entspricht, zugeführt. Diese Temperatur wird über eine Signalaufbereitungsschaltung 29 der Steuereinheit zugeführt. Vor allem in Abhängigkeit von diesem Signal wird der DC/DC-Spannungswandler 28 geregelt.

Mit dem in Figur 3 dargestellten Bordnetzmodul läßt sich zum einen die Spannung an der Startbatterie 18 gegenüber der Spannung an der Versorgungsbatterie erhöhen. Dabei sind Spannungen an der Startbatterie bis zu 17 V möglich, die die tatsächliche Höhe der Spannung, die mit Hilfe des DC/DC-Wandlers erzeugt wird, hängt von der Temperatur des Startspeichers ab, wobei die höhere Spannung bei tiefen Temperaturen erzeugt wird. Zur optimalen Ladung der Startbatterie kann bei bekannter Temperatur die Ladespannung so gewählt werden, daß die Ladung nahe der Gasungsgrenze erfolgt. Eine kurze Aufladezeit wird durch den Einsatz eines leistungsstarken Spannungswandlers erreicht. Damit ist maximale Startleistung auch bei tiefsten Temperaturen garantiert. Ggf. kann ein Spannungswandler eingesetzt werden, der auch in umgekehrter Richtung arbeitet und die von der Startbatterie bereitgestellte Spannung so aufbereitet, daß die Start- und Ersatzbetriebskomponenten mit der für sie erforderlichen ausreichenden Spannung versorgt werden können, wobei der Umschalter dann nur als einfacher Öffner zwischen Kl.30 und Kl.30b ausgeführt ist.

Sowohl das in Figur 2 als auch das in Figur 3 dargestellte Bordnetzmodul kann in beliebiger Form, beispielsweise Logik, ASICs und/oder mit Mikroprozessoren realisiert sein und ggf. mit Zusatzfunktionen erweitert werden. Auch eine mehrkanalige Ausgestaltung des Bordnetzmoduls ist möglich. Bei dem in Figur 2 dargestellten Bordnetzmodul kann eine kostengünstige Ein-Chip-Lösung mit begrenztem Ladestrom bei minimalem Platzbedarf und Gewicht eingesetzt werden, um die Trennfunktion von Start- und Versorgungskreis sowie die Umschaltung der Versorgung der Komponenten für den Notstart und Ersatzbetrieb des Fahrzeuges zu gewährleisten.

In den Figuren 4 bis 8 sind weitere Bordnetzmodule 22c bis g dargestellt, die in den Bordnetzsteuergeräten 16 eingebaut werden können oder diese ersetzen können. Da auch ein Einsatz in anderen Zweispannungsnetzen denkbar ist, werden die Anschlüsse in den Figuren 4 bis 8 mit Kl.A, Kl.B und Kl.C bezeichnet.

Bei dem in Figur 4 dargestellten allgemeinen Bordnetzmodul ist mittels eines Umschalters 30 die Klemme Kl.C wahlweise mit der Klemme Kl.A oder der Klemme Kl.B verbindbar. Zwischen Klemme Kl.A und Klemme Kl.C liegt ein Analogschalter 31 und ein Spannungswandler 32 mit den Spannungen U1, U2. Zwischen Klemme Kl.C und Klemme Kl.B sind ein Analogschalter 33 und ein Spannungswandler 34 mit U3, U4 geschaltet. Mit dieser Anordnung kann eine Umschaltung elektromechanisch mit einem Umschaltrelais oder zwei Schließer/Öffnerrelais oder elektronisch, beispielsweise mit Analogschaltern erfolgen. Mit diesem Modul lassen sich folgende Basisfunktionen realisieren:

### 1. Umschaltung des Anschluß Kl.C vom Anschluß Kl.A zum Anschluß Kl.B

Die Lasten, die am Anschluß Kl.C liegen, können entweder vom Anschluß Kl.B oder bei aktiviertem Relais vom Anschluß Kl.A versorgt werden. Zur Vermeidung eines Versorgungseinbruchs und zur Entlastung der Relaiskontakte kann während der Umschaltung einer bzw. beide Analogschalter 31, 33 durchgeschaltet werden.

Mit der Anordnung nach Figur 4 kann weiterhin eine uni- oder bidirektionale Steuerung bzw. Regelung des Stromflusses zwischen den Anschlüssen Kl.A und Kl.B, Kl.A und Kl.C sowie Kl.B und Kl.C und Kl.C und Kl.A erfolgen. Eine uni- bzw. bidirektionale Spannungswandlung zwischen Kl.A und Kl.B, Kl.A und Kl.C sowie Kl.B und Kl.C ist ebenfalls möglich. Voraussetzung ist der Einsatz geeigneter Spannungswandler, wobei diese so auszulegen sind, daß die mit Kl.C in Verbindung stehenden Seiten der Spannungswandler stets eine Spannung von 12 V liefern.

Das in Figur 4 dargestellte Bordnetzmodul kann beispielsweise in einem Zwei-Batterien-Bordnetz nach Figur 1 eingesetzt werden. Es wird dann an den Anschluß Kl.A die Batterie 18, die nur für die Versorgung des Starters 17 bzw. für die Versorgung eines weiteren speziellen Stromkreises dient, beispielsweise für Hochstromlasten, wie elektrischen Katalysator, Frontscheibenheizung und ähnliches angeschlossen. Der Anschluß Kl.B ist mit den übrigen Bordnetzkomponenten, wie Generator 11, Versorgungsbatterie 13 und nicht startspezifischen Verbrauchern 14, 15 sowie weitere verbunden. Über den Anschluß Kl.C können dann startspezifische Bordnetzkomponenten bzw. Bordnetzkomponenten, für deren Versorgung ein Batteriebetrieb unbedingt erforderlich ist, angeschlossen werden. Diese Komponenten umfassen beispielsweise die Motorelektrik, elektrische Kraftstoffpumpen, Generatorerregung usw.

Wird beim Betriebszustand "Zündung ein" z. B. eine Spannungsschwelle am Anschluß Kl.B unterschritten, liegt ein Startvorgang vor und der Umschalter 30 wird aktiviert. Dadurch werden die gesamten, für den Start notwendigen Komponenten auf den Anschluß Kl.A umgeschaltet. Hierdurch ist ein Start auch bei leerer Versorgungsbatterie möglich, wenn sichergestellt ist, daß die Startbatterie 18 immer ausreichend geladen ist. Unter Voraussetzung, daß die Startbatterie 18 nur während des Starts belastet wird und danach so schnell wie möglich wieder geladen wird, ist ein ausreichender Ladezustand gewährleistet. Ein ausreichender Ladezustand kann auch gewährleistet werden bei ausreichend hoher Spannung im generatorseitigen Bordnetzstromnetz, indem der Analogschalter 31 nur dann durchschaltet, wenn diese generatorische Spannung größer der Startkreisspannung ist (Diodenfunktion mit geringem Spannungsabfall). Soll eine schnelle Aufladung sichergestellt werden, ist entweder der Generator 11 ausreichend leistungsstark zu wählen (zur Sicherung einer ausreichend hohen Ladespannung) oder ausreichend zu dimensionieren, bzw. es ist ein Spannungswandler, beispielsweise ein DC/DC-Wandler vorzusehen, der in jeder Fahrzeugbetriebssituation und bei Fahrzeugstillstand eine Aufladung der Startbatterie am Anschluß Kl.A ermöglicht.

In Figur 5 ist eine weitere Ausgestaltung eines Bordnetz-Moduls 22d dargestellt. Diese Variante beinhaltet einen elektronischen Schalter, der die Anschlüsse Kl.A und Kl.B miteinander verbinden kann. Diese Verbindung kann automatisch, beispielsweise bei einer Spannungsdifferenz zwischen den Klemmen oder aufgrund eines externen Signales, das über Kl.X zugeführt wird, geschehen. Das Bordnetzmodul nach Figur 5, das sich aus zwei Feldeffekttransistoren 35, 36, einem Komparator 37 und einer Spannungsversorgung 18 zusammensetzt, zeichnet sich durch einen bidirektionalen minimalen stromabhängigen Spannungsabfall im Vergleich zu einer Diode aus. Eine weitere Möglichkeit ist die Verwendung des Analogschalters als Längsregler durch Variieren der Gate-Spannungen. Eine Pulsbreitenmodulation des Stromes mit dem Analogschalter ist ebenfalls möglich. Der Analogschalter kann auch in einer Überlast geschützten Form ausgelegt sein, wodurch eine weitere Steigerung der Zuverlässigkeit möglich ist.

Das Bordnetzmodul nach Figur 5 kann wiederum in Verbindung mit einem Zwei-Batterie-Bordnetz nach Figur 1 eingesetzt werden. Es eignet sich zur Verbindung von Bordnetzzweigen mit und ohne eigene Pufferspeicher, es eignet sich also prinzipiell auch zur Verbindung von Bordnetzzweigen ohne eigene Batterien oder Akkumulatoren oder Kondensatoren. Der Einsatz eines solchen Bordnetzmoduls gewährleistet einen bidirektionalen Stromfluß von Anschluß Kl.A nach Anschluß Kl.B und umgekehrt. Es tritt nur ein geringer Spannungsabfall auf und es kann eine Durchschaltung bei beliebigen Spannungen erfolgen. Dies wäre beim Einsatz von Dioden Bipolartransistoren oder Thyristoren nicht der Fall. Da der Spannungsabfall bei kleineren Strömen abnimmt, können beispielsweise bei der Aufladung von einer Batterie über den Schalter auch kleine Spannungsunterschiede zur Aufladung ausgenutzt werden. Durch den Einsatz von überlastgeschützten Analogschaltern ist auch die Verbindung von Stromzweigen mit hohen Spitzenströmen ohne Einsatz von hierauf dimensionierten Leistungshalbleitern möglich.

In Figur 6 ist ein weiteres Bordnetzmodul 22e dargestellt, das eine Umschaltfunktion aufweist. Dieses Modul umfaßt ein Relais 39, einen Komparator 40, dessen invertierendem Eingang eine Referenzspannung zugeführt wird, während dessen nicht invertierender Eingang mit Anschluß Kl.B in Verbindung steht und über das Relais 39 auf Anschluß Kl.A schaltbar ist. Die Spannungsversorgung ist in diesem Falls mit 41 bezeichnet.

Die in Figur 6 dargestellte Variante eines Bordnetzmoduls stellt einen mechanischen oder elektronischen Umschalter dar, der beispielsweise beim Unterschreiten einer Mindestspannung des Anschluß Kl.C vom Anschluß Kl.B zum Anschluß Kl.A umschaltet. Auch diese Variante kann im Zusammenhang mit einem Zwei-Batterien-Bordnetz eingesetzt werden. Es werden dann die für den Betrieb relevanten Verbraucher an den Anschluß Kl.C angeschlossen. Bei einer entladenen Versorgungsbatterie 13, die an Kl.B angeschlossen ist und z. B. am Unterschreiten der Mindestspannung bei Belastung bzw. durch ein externes Steuersignal erkannt werden kann oder aufgrund eines anderen Parameters wird Kl.C von Kl.B nach Kl.A umgeschaltet. Die Spannungsversorgung der für den Betrieb relevanten Bauteile wird dann durch die Startbatterie 18 übernommen. Durch die Erkennung des Zusammenbruchs der Spannung an der Versorgungebatterie wird also eine Umschaltung ausgelöst und damit sichergestellt, daß die relevanten Verbraucher ausreichend versorgt werden.

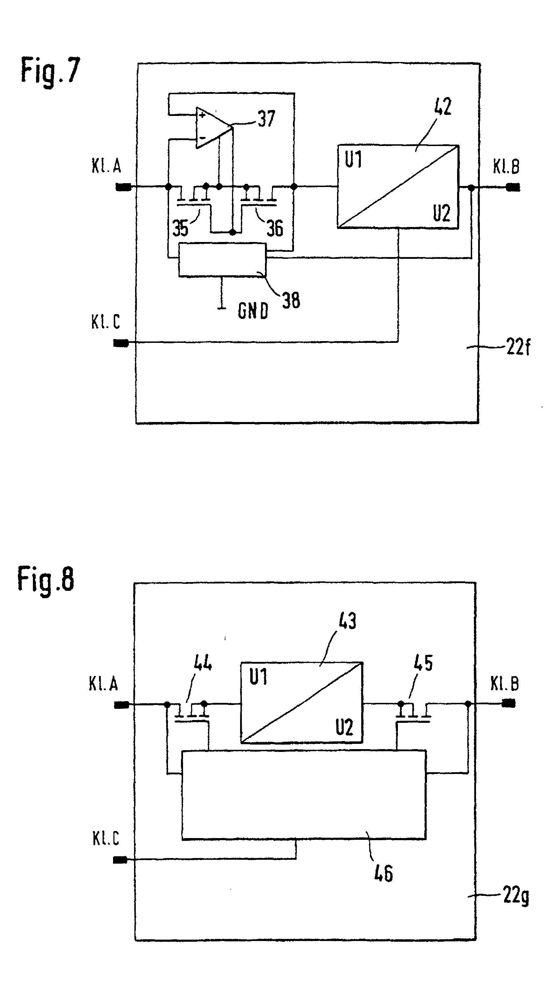

In Figur 7 ist ein Bordnetzmodul 22f mit einer Kombination aus Analogschalter und Spannungswandler dargestellt. Dieses Ausführungsbeispiel entspricht dem nach Figur 5, ergänzt um einen Spannungswandler 42, der einerseits mit Anschluß Kl.B sowie der Spannungsversorgung und andererseits mit dem Analogschalter in Verbindung steht und zusätzlich auf Anschluß Kl.C geführt ist. Mit dieser Variante ist ein elektronischer Schalter mit einem vorgeschalteten Spannungswandler für höhere sowie niedrigere Spannungen realisiert. Der Spannungswandler kann in vielfältiger Form, beispielsweise kapazitiv oder induktiv sowie uni- oder bidirektional ausgeführt sein. Hierbei wäre eine Aufteilung der Feldeffekttransistoren (MOSFET) des Analogschalters auf der Seite Kl.A und Kl.B vom Spannungswandler vorteilhaft. Die Feldeffekttranssistoren sind dabei drainseitig mit Klemmen zu verbinden, damit bei einer Spannungsdifferenz zwischen Spannungswandlerausgang und den Klemmen der Strom aus dem Wandler über die Diode des Feldeffekttransistors fließen kann. Hierbei ist ein zusätzliches Durchschalten der Feldeffekttransistoren in diesen Phasen aus Verlustleistungsgründen sinnvoll.

Bei der Kombination von Spannungswandler und Analogschalter ist der Ersatz der Ausgangsdiode des Spannungswandlers durch den jeweiligen Feldeffekttransistor möglich. Hierbei wird die Inversdiode im Feldeffekttransistor für diese Funktion benutzt bzw. der Feldeffekttransistor in den jeweiligen Phasen durchgeschaltet. Damit läßt sich eine Reduzierung der Verlustleistung erzielen. Weiterhin kann auch ein bidirektionaler Spannungswandler durch einen zusätzlichen, Masse bezogenen, Lowside-Schalter (z. B. MOSFET) und den aufgeteilten Analogschalter realisiert werden, so daß der jeweilige Feldeffekttransistor die Ausgangsdiode ersetzt. Je nach Wandlungsrichtung ist ein Feldeffekttransistor durchzuschalten und der andere als Diode zu benutzen.

In Figur 8 ist ein weiteres Bordnetzmodul 22g dargestellt, bei dem der Spannungswandler 43 zwischen den beiden Feldeffekttransistoren 44, 45 angeordnet ist und eine Einrichtung zur Steuerung oder Regelung 46 jeweils mit den Anschlüssen Kl.A, Kl.B und Kl.C verbunden ist und darüber hinaus mit den Feldeffekttransistoren. Mit einer solchen Anordnung ist eine Verbindung von Bordnetzzweigen mit und ohne eigenen Pufferspeicher (Batterie, Akku, Kondensator) möglich. Es kann ein bidirektionaler Stromfluß geführt werden, es tritt ein geringer Spannungsabfall auf und es kann bei beliebigen Spannungen eine Durchschaltung erfolgen. Da der Spannungsabfall bei kleinen Strömen abnimmt, können bei der Aufladung von einer Batterie über den Schalter auch kleine Spannungsunterschied zur Aufladung ausgenutzt werden. Mittels eines DC/DC-Wandlers kann eine höhere bzw. eine niedrigere Spannung an den Klemmen zur Verfügung gestellt werden. Diese Spannung kann funktionsspezifisch von verschiedensten Parametern gesteuert oder geregelt werden, beispielsweise in Verbindung mit einer Batterietemperaturmessung zur optimalen Aufladung der Batterie.

Weitere Konfigurationen mit Serien- und Parallelschaltungen der Teilmodule Analogschalter, Umschalter und DC/DC-Wandler sind denkbar. Bei Verwendung von bidirektionalen Spannunswandlern im Bordnetz-Steuergerät ist eine Ausgestaltung möglich, die die betriebsrelevanten Komponenten auch während des Starts von der Starterbatterie aus ermöglicht, wobei der Spannungswandler dann die startbedingte eingebrochene Spannung auf eine höhere Spannung, z. B. auf Nennspannung hochsetzt. Damit können die betriebsrelevanten Komponenten auf einen geringeren Arbeitsspannungsbereich, statt auf 6 bis 16 V auf 10 bis 16 V angelegt werden.

## Patentansprüche

1. Vorrichtung zur Spannungsversorgung in einem Kraftfahrzeug mit einem Versorgungskreis (10), der wenigstens einen Generator (11), dessen Ausgangsspannung mittels eines Spannungsreglers (12) geregelt wird, eine erste Batterie (13) und Verbraucher (14), die jeweils mit dem Generator (11) in Verbindung stehen, umfaßt und mit einem Startkreis (20), der wenigstens eine zweite Batterie (18), die dem Starter (17) zugeordnet ist, umfaßt und über Schaltmittel eines Bordnetzsteuergerätes (16) mit dem Generator (11) sowie der ersten Batterie (13) verbindbar ist, wobei das Bordnetzsteuergerät (16) mit dem Versorgungskreis (10) und dem Startkreis (20) über jeweils wenigstens einen Anschluß (Kl.30, Kl.30a) in Verbindung steht und die Umschaltvorgänge mittels einer Steuereinheit des Bordnetzsteuergerätes (16), insbesondere eines Mikroprozessors gesteuert werden und die Schaltmittel Bestandteil eines Bordnetzmoduls (22) des Bordnetzsteuergerätes (16) sind, **dadurch gekennzeichnet, dass** das Bordnetzmodul (22) einen weiteren Anschluß (Kl.30b) aufweist, über den betriebsrelevante Komponenten (21) mit dem Versorgungs- (10) oder mit dem Startkreis (20) verbindbar sind und die Schaltmittel des Bordnetzmoduls so angesteuert werden, dass die betriebsrelevanten Komponenten (21) auch bei schlechtem Ladezustand einer der Batterien zuverläßig mit Spannung versorgt werden.

2. Vorrichtung zur Spannungsversorgung nach Anspruch 1, **dadurch gekennzeichnet, daß** die betriebsrelevanten Komponenten (21) alle Komponenten umfassen, die im üblichen Betrieb und im Notbetrieb unbedingt mit Spannung versorgt werden müssen und den Betrieb des Fahrzeuges wenigstens für eine gewisse Zeit ermöglichen.

3. Vorrichtung zur Spannungsversorgung nach Anspruch 1 oder 2, **dadurch gekennzeichnet, daß** ein Bordnetzmodul (22a, 22d, 22e) ohne Spannungswandler eingesetzt wird, daß beide Batterien (13), (18) die selbe Nennspannung aufweisen und die Umschaltvorgänge zur Sicherstellung der Versorgung der betriebsrelevanten Komponenten (21) so durchgeführt werden, die Versorgung aus der besser geladenen Batterie erfolgt.

4. Vorrichtung zur Spannungsversorgung nach Anspruch 1 oder 2, **dadurch gekennzeichnet, daß** wenigstens ein Spannungswandler (32), (34), (42), (43) vorhanden ist, insbesonders ein DC/DC-Wandler, dessen eine Seite mit dem Versorgungskreis (10) und der Spannungsversorgung für die betriebsrelevanten Komponenten (21) in Verbindung steht und dessen andere Seite mit der Startbatterie (18) in Verbindung steht.

5. Vorrichtung zur Spannungsversorgung nach einem der vorhergehenden Ansprüche, **dadurch gekennzeichnet, daß** wenigstens ein elektronischer Schalter und ein Umschalter (23), insbesonders ein Relais zwischen dem Versorgungskreis (10) und dem Startkreis (20) angeordnet ist, wobei der Anschluß (Kl.30b) für die betriebsrelevanten Komponenten (21) zwischen dem elektronischen Schalter (24) und dem Umschalter (23) liegt.

6. Vorrichtung zur Spannungsregelung nach einem der vorhergehenden Ansprüche, **dadurch gekennzeichnet, daß** wenigstens ein Signal, das insbesonders die Sensierung der Startspeichertemperatur zuläßt, dem Bordnetzmodul (22) zugeführt wird und von diesem bzw. dem zugehörigen Mikroprozessor bei der Regelung der Batterieladespannung und des Spannungswandlers berücksichtigt wird.

7. Vorrichtung zur Spannungsversorgung nach einem der vorhergehenden Ansprüche, **dadurch gekennzeichnet, daß** ein weiterer Anschluß (Kl.15x) im Bordnetzmodul (22) vorhanden ist, über den ein externes Ansteuersignal zuführbar ist, das bei der Ansteuerung der elektronischen Schalter (22) bzw. des Relais (23) berücksichtigt wird.

8. Vorrichtung zur Spannungsversorgung nach einem der vorhergehenden Ansprüche, **dadurch gekennzeichnet, daß** die Spannungswandler (32), (34), (42), (43) bidirektional ausgeführt sind, so daß die betriebsrelevanten Komponenten (21) auch während des Starts von dem Startspeicher (18) versorgt werden können, wobei der betreffende Spannungswandler (32), (34), (42), (43) dann die startbedingt eingebrochene Spannung auf eine höhere Spannung insbesonders auf Nennspannung hochsetzt.

9. Vorrichtung zur Spannungsversorgung nach Anspruch 8, **dadurch gekennzeichnet, daß** die Spannungswandler und die betriebsrelevanten Komponenten (21) auf einen geringen Arbeitsspannungsbereich von 10 bis 16 Volt ausgelegt werden.

## Claims

1. Device for supplying power in a motor vehicle, having a supply circuit (10) which comprises at least one generator (11) whose output voltage is regulated by a voltage regulator (12), a first battery (13) and a consumer (14) which are connected in each case to the generator (11), and having a starting circuit (20) which comprises at least one second battery (18) which is assigned to the starter (17) and can be connected to the generator (11) and the first battery (13) via switching means of a vehicle network controller (16), the vehicle network controller (16) being connected to the supply circuit (10) and the starting circuit (20) via in each case at least one terminal (Kl.30, Kl.30a), and the switchover operations being controlled by means of a control unit of the vehicle network controller (16), in particular a microprocessor, and the switching means being a constituent of a vehicle network module (22) of the vehicle network controller (16), **characterized in that** the vehicle network module (22) has a further terminal (Kl.30b) via which operational components (21) can be connected to the supply circuit (10) or to the starting circuit (20) and the switching means of the vehicle network module are driven in such a way that the operational components (21) are reliably supplied with voltage even in the case of a poor charging state of one of the batteries.

2. Device for supplying power according to Claim 1, **characterized in that** the operational components (21) comprise all components which must absolutely be supplied with voltage in normal operation and in emergency operation, and which permit the vehicle to be operated at least for a certain time.

3. Device for supplying power according to Claim 1 or 2, **characterized in that** a vehicle network module (22a, 22d, 22e) without voltage transformer is used, **in that** both batteries (13), (18) have the same nominal voltage, and the switchover operations for ensuring the supply of the operational components (21) are carried out such that the supply is performed from the battery with a better charge.

4. Device for supplying power according to Claim 1 or 2, **characterized in that** at least one voltage transformer (32), (34), (42), (43) is present, in particular a DC/DC transformer, one side of which is connected to the supply circuit (10) and the power supply for the operational components (21), and the other side of which is connected to the starting battery (18).

5. Device for supplying power according to one of the preceding claims, **characterized in that** at least one electronic switch and one changeover switch (23), in particular a relay, are arranged between the supply circuit (10) and the starting circuit (20), the terminal (Kl.30b) for the operational components (21) being situated between the electronic switch (24) and the changeover switch (23).

6. Device for supplying power according to one of the preceding claims, **characterized in that** at least one signal which, in particular, permits the sensing of the starting memory temperature is fed to the vehicle network module (22), and is taken into account by the latter or the associated microprocessor in regulating the battery charging voltage and the voltage transformer.

7. Device for supplying power according to one of the preceding claims, **characterized in that** there is present in the vehicle network module (22) a further terminal (Kl.15x) via which it is possible to feed an external drive signal which is taken into account in driving the electronic switch (22) or the relay (23).

8. Device for supplying power according to one of the preceding claims, **characterized in that** the voltage transformers (32), (34), (42), (43) are of bidirectional design such that the operational components (21) can be supplied even during starting of the starting memory (18), the relevant voltage transformer (32), (34), (42), (43) then stepping up the voltage which has dipped owing to the start, to a higher voltage, in particular to nominal voltage.

9. Device for supplying power according to Claim 8, **characterized in that** the voltage transformers and the operational components (21) are designed for a narrow working voltage range of 10 to 16 volts.

## Revendications

1. Dispositif d'alimentation en courant d'un véhicule automobile, dans lequel :
- un circuit d'alimentation (10) comprend au moins un générateur (11) dont la tension de sortie est réglée par un régulateur de tension (12), une première batterie (13) et des utilisations (14) reliées chacune au générateur,
- un circuit de démarrage (20), qui comprend au moins une seconde batterie (18) associée au démarreur (17) et qui, par l'intermédiaire de moyens de connexion d'un appareil de commande (16) de réseau de bord peut être relié au générateur (11) ainsi qu'à la première batterie (13) étant précisé que l'appareil (16) de commande de réseau de bord est relié au circuit d'alimentation (10) et au circuit de démarrage (20) chaque fois par au moins un raccordement (Kl.30, Kl.30a) et que les commutations sont commandées par une unité de commande notamment un microprocesseur appartenant à l'appareil de commande (16) de réseau de bord, les moyens de commutation étant des composants d'un module de réseau (22) faisant partie de cet appareil de commande (16) de réseau de bord,
**caractérisé en ce que**
le module de réseau de bord (22) présente un autre raccordement (Kl.30b) permettant de relier les composants (21) intéressant le fonctionnement au circuit d'alimentation (10) ou au circuit de démarrage (20), les moyens de commutation du module de réseau de bord étant commandés de manière que les composants (21) intéressant le fonctionnement sont sûrement alimentés en tension, même quand l'état de charge d'une des batteries est mauvais.

2. Dispositif d'alimentation en courant selon la revendication 1,
**caractérisé en ce que**
les composants (21) intéressant le fonctionnement sont tous ceux qui, en fonctionnement normal ou de détresse, doivent absolument être alimentés en tension et qui permettent au véhicule de fonctionner au moins pendant un certain temps.

3. Dispositif d'alimentation en courant selon l'une quelconque des revendications 1 ou 2,
**caractérisé en ce qu'**
il utilise un module de réseau de bord (22a, 22d, 22e) sans convertisseur de tension, les deux batteries (13, 18) ont la même tension nominale et les commutations servant à garantir l'alimentation des composants (21) intéressant le fonctionnement s'effectuent de manière que l'alimentation soit assurée par la batterie la mieux chargée.

4. Dispositif d'alimentation en courant selon l'une quelconque des revendications 1 ou 2,
**caractérisé en ce qu'**
il y a au moins un convertisseur de tension (32, 34, 42, 43), en particulier un convertisseur continu/alternatif, dont un côté est relié au circuit d'alimentation (10) et à l'alimentation en tension des composants (21) intéressant le fonctionnement, tandis que l'autre côté est relié à la batterie de démarrage (18).

5. Dispositif d'alimentation en courant selon l'une quelconque des revendications précédentes,
**caractérisé en ce qu'**
au moins un contacteur électronique et un commutateur (23), en particulier un relais, est monté entre le circuit d'alimentation (10) et le circuit de démarrage (20), le raccordement (Kl.30b) des composants (21) intéressant le fonctionnemetn étant monté entre le contacteur électronique (24) et le commutateur (23).

6. Dispositif d'alimentation en courant selon l'une quelconque des revendications 1 ou 2,
**caractérisé en ce qu'**
au moins un signal, permettant notamment de détecter la température de la batterie de démarrage, est envoyé au tableau de bord qui le prend en compte, par lui-même ou par le microprocesseur correspondant, dans la régulation de la tension de charge de la batterie et du convertisseur de tension.

7. Dispositif d'alimentation en courant selon l'une quelconque des revendications précédentes
**caractérisé en ce que**
dans le module de réseau de bord (22), il y a un autre raccordement (Kl.15x) par lequel peut être amené un signal externe de commande qui est pris en compte dans la commande de contacteur électronique (22) ou du relais (23).

8. Dispositif d'alimentation en courant selon l'une quelconque des revendications précédentes
**caractérisé en ce que**
les convertisseurs de tension (32, 34, 42, 43) sont bidirectionnels, de sorte que les composants (21) intéressant le fonctionnement peuvent être alimentés même pendant le démarrage par la batterie de démarrage (18), le convertisseur de tension concerné (32, 34, 42, 43) élevant alors la tension qui s'est effondrée du fait du démarrage à une tension plus forte, en particulier la tension nominale.

9. Dispositif d'alimentation en courant selon la revendication 8,
**caractérisé en ce que**
le convertisseur de tension et les composants (21) intéressant le fonctionnement sont conçus pour une faible plage de tension de travail, allant de 10 à 16 volts.
